# EUROPÄISCHE PATENTSCHRIFT

(11) **EP 1 266 553 B1**
(45) Veröffentlichungstag und Bekanntmachung des Hinweises auf die Patenterteilung: **07.06.2006**
(21) Anmeldenummer: 02013059.7
(22) Anmeldetag: 13.06.2002
(51) Int. Cl.: A01B 69/00, A01B 79/00

(54) **Einrichtung zur selbsttätigen Lenkung eines landwirtschaftlichen Arbeitsfahrzeugs**
Agricultural working vehicle automatic steering device
Dispositif de direction automatique pour véhicule de travail agricole

(30) Priorität: 16.06.2001 DE 10129133
(43) Veröffentlichungstag der Anmeldung: 18.12.2002
(73) Patentinhaber: DEERE & COMPANY, Moline, Illinois 61265-8098 (US)
(72) Erfinder: Beck, Folker, Dr., Bettendorf, IA 52722 (US)
(74) Vertreter: Holst, Sönke

(56) Entgegenhaltungen:
- EP-A- 0 992 185
- US-A- 5 612 864
- US-A- 6 095 254
- US-A- 6 101 795
- US-A- 6 128 574

## Beschreibung

Die Erfindung betrifft eine Einrichtung zur selbsttätigen Lenkung eines landwirtschaftlichen Arbeitsfahrzeugs, mit einer Steuerungseinrichtung, die von einem ersten Positionssensor mit einem ersten Positionssignal, von einem zweiten Positionssensor mit einem zweiten Positionssignal und mit einer Sollweginformation beaufschlagt wird, wobei das erste Positionssignal und das zweite Positionssignal jeweils eine Information über die derzeitige Position des Arbeitsfahrzeugs enthalten, die Sollweginformation eine Information über einen beabsichtigten Weg des Arbeitsfahrzeugs enthält, die Steuerungseinrichtung einer Lenkeinrichtung des Arbeitsfahrzeugs ein Lenksignal zuführt, das auf der Sollweginformation und einem Positionssignal beruht, und der Steuerungseinrichtung eine Qualitätsinformation über die Genauigkeit eines der Positionssignale vorliegt.

Die US 6 095 254 A beschreibt ein landwirtschaftliches Fahrzeug mit einem einen Winkelbereich vor dem Fahrzeug abtastenden Sensor, der elektromagnetische Wellen auf eine bei einem zuvor durchgeführten Bearbeitungsvorgang entstandene Grenze abstrahlt. Die reflektierten Wellen werden empfangen und ihre Laufzeit und Amplitude werden ausgewertet. Anhand einer relativ steilen Änderung in den empfangenen Signalen wird die Bearbeitungsgrenze erkannt. Ihre Position wird mit einer Sollposition verglichen und aus eventuellen Abweichungen wird ein Stellsignal für eine automatische Lenkung abgeleitet. Die empfangenen Signale können auch mit einer Information über die Position, an der sie aufgenommen wurden, abgespeichert werden. Die Information über die Position wird mittels einer GPS-Antenne erfasst. Die Information über die Position wird nicht zur Erzeugung des Lenksignals verwendet.

Eine ähnliche Lenkeinrichtung wird in der US 6 101 795 A beschrieben. Dort findet ein erster, einen weiter vor der Maschine die Bearbeitungskante abtastender, auf einer Laufzeitmessung beruhender Sensor oder eine Kamera mit einem Bildverarbeitungssystem und ein zweiter, die Bearbeitungskante unmittelbar vor dem Schneidwerk erfassender Sensor Verwendung. Die Signale beider Sensoren werden derart zur Erzeugung eines Lenksignals verwendet, dass man für beide Sensoren eine minimale Abweichung von einem Sollwinkel zwischen der gemessenen und gewünschten Fahrtrichtung erhält.

Die EP 0 992 185 A beschreibt eine weitere Lenkeinrichtung, bei der ein erster Strahl auf einen Bereich auf der ersten Seite einer Bearbeitungskante und ein zweiter Strahl auf einen Bereich auf der zweiten Seite der Bearbeitungskante gerichtet wird, der mit dem ersten Bereich überlappt. Die Signale des auf den Getreidebestand gerichteten Sensors dienen zur Normierung der Signale des anderen Sensors. Die normierten Signale werden mit einem Sollwert verglichen und die Differenz wird zur Erzeugung eines Lenksignals verwendet.

Die erwähnten Dokumente US 6 095 254 A, US 6 101 795 A und EP 0 992 185 A beschreiben zwar jeweils automatische Lenkeinrichtungen für landwirtschaftliche Maschinen, die mindestens zwei Sensoren zur Erzeugung von Positionsinformationen erfassen. Die Signale der Sensoren werden jedoch jeweils mit denselben Sollwerten bzw. Sollweginformationen verglichen, die die Maschinen entlang einer Bearbeitungskante führen. Wenn einer der Sensoren ausfällt oder (z. B. wegen Verschmutzung) unbrauchbare Signale liefert, versagen die Lenksysteme.

Es ist aus der WO 94/24845 A und der EP 0 821 296 A bekannt, landwirtschaftliche Arbeitsfahrzeuge anhand ihrer jeweiligen Position und eines abgespeicherten, beabsichtigten Sollwegs selbsttätig zu lenken. Die Position wird von einem Ortungssystem unter Verwendung eines Satellitensystems (GPS bzw. DGPS) erfasst. Damit im Falle eines Ausfalls des Satellitensignals das Ortungssystem weiterbetrieben werden kann, ist in der EP 0 821 296 A vorgesehen, das Arbeitsfahrzeug mit Fahrtrichtungs- und Geschwindigkeitssensoren auszustatten. Außerdem wird in beiden Schriften vorgeschlagen, die Signale des Satellitensystems durch am Arbeitsfahrzeug angebrachte Sensoren zu ergänzen, die beispielsweise eine Erntegutkante oder ein Schwad erfassen. Dazu kann gemäß der WO 94/24845 A ein Bildverarbeitungssystem oder gemäß der EP 0 821 296 A ein auf Reflexortung (z.B. Laserscanner) oder mechanischer Abtastung beruhendes Erntegutkanten-Orientierungssystem vorgesehen sein.

In beiden genannten Fällen erfolgt die Lenkung ausschließlich auf der Basis einer im Vorab abgespeicherten Karte, die den zurückzulegenden Weg definiert. Es sind jedoch viele Fälle denkbar, in denen von einer zu bearbeitenden landwirtschaftlichen Fläche keine Karte vorliegt und eine Erzeugung einer Karte unwirtschaftlich wäre.

Die der Erfindung zugrunde liegende Aufgabe wird darin gesehen, eine verbesserte Einrichtung zur selbsttätigen Lenkung eines landwirtschaftlichen Arbeitsfahrzeugs bereitzustellen, die sich durch hohe Genauigkeit und vielfältige Einsatzmöglichkeiten auszeichnet.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung bezieht sich auf eine Einrichtung zur selbsttätigen Lenkung eines landwirtschaftlichen Arbeitsfahrzeugs, die eine Steuerungseinrichtung umfasst, die aus einem ersten Positionssignal, einem zweiten Positionssignal und einer Sollweginformation, das den zurückzulegenden Weg definiert, ein Lenksignal erzeugt, welches einer selbsttätigen Lenkeinrichtung des Arbeitsfahrzeugs zugeführt wird. Das erste Positionssignal und das zweites Positionssignal werden durch separate Sensoren unabhängig voneinander erzeugt. Außerdem wird der Steuerungseinrichtung eine Qualitätsinformation zugeführt, die darauf hinweist, welche Genauigkeit zumindest eines der Positionssignale aufweist. Die Erfindung schlägt vor, die Qualitätsinformation zur Auswahl der Sollweginformation aus mehreren möglichen Sollweginformationen zu verwenden. Entsprechend der aus der Qualitätsinformation ableitbaren Genauigkeit des Positionssignals eines der Positionssensoren wird die geeignete, zweckmäßigerweise die am besten mit dem Positionssignal des Positionssensors kombinierbare Sollweginformation ausgewählt. Anhand der gemessenen aktuellen Position und des ausgewählten Sollwegsignals erzeugt die Steuerungseinrichtung ein Lenksignal, das der selbsttätigen Lenkeinrichtung des Arbeitsfahrzeugs zugeführt wird.

Beispielsweise wäre es denkbar, das Arbeitsfahrzeug bei hinreichender Genauigkeit eines mit dem Positionssignal eines mit einem ortsfesten Objekt, z. B. einer Bearbeitungsgrenze zusammenwirkenden Positionssensors entlang des Objekts (Bearbeitungsgrenze) zu steuern. In diesem. Fall entspricht die Sollweginformation der beabsichtigten Position des Arbeitsfahrzeugs relativ zur Bearbeitungsgrenze. Eine im Vorab erzeugte digitale Karte der zu bearbeitenden Fläche ist nicht erforderlich. Weist die Qualitätsinformation darauf hin, dass die Genauigkeit dieses Positionssignals nicht (mehr) hinreichend ist, kann die Steuerungseinrichtung die Sollweginformation selbsttätig aus dem bisher zurückgelegten Weg, über den (in der Art einer Lernfahrt) entsprechende Positionsinformationen in Form einer Karte aufgezeichnet wurden, ableiten. Die Lenkung erfolgt dann anhand des Signals eines anderen Positionssensors. Die Sollweginformation entspricht nunmehr der erzeugten Karte, die den zurückzulegenden Weg definiert. Ergibt sich später anhand der Qualitätsinformation, dass die Genauigkeit des die Bearbeitungsgrenze erfassenden Positionssignals wieder hinreicht, kann letzteres wieder zur Lenkung der Arbeitsmaschine verwendet werden. Analog ist denkbar, die Arbeitsmaschine in der Regel satellitengestützt anhand einer abgespeicherten Karte zu lenken und bei Ausfall des Satellitensignals einen Bearbeitungsgrenzensensor und einen Bewegungssensor zur Erzeugung des Lenksignals zu verwenden, wobei die Sollweginformation nunmehr nicht der Karte, sondern dem beabsichtigten Querabstand zur Bearbeitungsgrenze entspricht.

Auf diese Weise wird es möglich, eine landwirtschaftliche Arbeitsmaschine mit mehreren unterschiedlichen Positionssensoren auszustatten und anhand einer dem jeweils geeignetsten Positionssensor angepassten Sollweginformation selbsttätig zu lenken. Die Erfindung erlaubt, als Sollweginformation nicht unbedingt eine aufwändig zu erzeugende, im Vorab abgespeicherte Karte, sondern relativ einfach zu gewinnende Informationen zu verwenden, z.B. die gewünschte Lage einer Bearbeitungsgrenze oder eine Information über einen zurückgelegten Weg.

In einer bevorzugten Ausführungsform der Erfindung wird vorgeschlagen, dass die Steuerungseinrichtung die Positionssignale des ersten und des zweiten Positionssensors bei der Erzeugung des Lenksignals anhand der der Steuerungseinrichtung vorliegenden Qualitätsinformation gewichtet berücksichtigt. Weist die Qualitätsinformation auf eine relativ hohe Genauigkeit des ersten Positionssignals hin, wird ersteres ausschließlich oder zumindest zu einem hohen Anteil beim Berechnen des Lenksignals berücksichtigt. Das zweite Positionssignal wird nur zu einem kleinen Anteil oder überhaupt nicht berücksichtigt. Analog wird das erste Positionssignal ignoriert oder nur zu einem kleinen Teil berücksichtigt, wenn die Qualitätsinformation auf eine geringe Genauigkeit des ersten Positionssignals hinweist. Bei etwa mittlerer Genauigkeit des ersten und zweiten Positionssignals können das erste und das zweite Positionssignal gleichgewichtet berücksichtigt werden. Die Sollweginformation wird entsprechend ausgewählt.

Vorzugsweise liegt der Auswertungseinrichtung eine Information über die Qualität (Genauigkeit) beider Positionssignals vor. Die Auswertungseinrichtung verwendet auch diese Information, um festzulegen, welches Positionssignal in welchem Maß berücksichtigt wird.

Als erstes Positionssignal kommt ein durch Satellitensignale erzeugtes Signal in Frage, das beispielsweise mittels einer entsprechenden Antenne, die mit dem GPS (Global Positioning System) zusammenwirkt, erzeugt werden kann. Es ist aber auch die Verwendung eines Trägheitsnavigationssystems denkbar.

Das zweite Positionssignal kann durch einen lokalen Sensor an dem landwirtschaftlichen Arbeitsfahrzeug erzeugt werden. Der lokale Sensor kann die Bewegung des Arbeitsfahrzeugs (Fahrtrichtung und Geschwindigkeit und möglicherweise auch Hangneigung) erfassen. Alternativ oder zusätzlich handelt es sich bei dem lokalen Sensor um einen Sensor, der die Position des Arbeitsfahrzeugs relativ zu einem ortsfesten Objekt erfasst, insbesondere eine Bearbeitungsgrenze. Derartige Sensoren sind in Form von Bildverarbeitungssystemen, Laserabtastsensoren oder mechanischen Tastvorrichtungen zur Erfassung von Erntegutreihen, wie sie zur automatischen Lenkung von Erntemaschinen verwendet werden, hinlänglich bekannt. Auch Sensoren zur Schneidbreitenmessung an Schneidwerken können verwendet werden.

Bei den Laserabtastsensoren besteht gelegentlich das Problem, dass sie keine Kante mehr erkennen können. Dieses Problem tritt beispielsweise dann auf, wenn die Bestandskante relativ niedrig ist, mehrere Kanten nebeneinander liegen, eine Kurve gefahren wird oder falls bei Beginn der Ernte noch keine Bestandskante erkennbar ist. Daher wird in einer bevorzugten Ausführungsform der Erfindung vorgeschlagen, dass dem lokalen Sensor eine anhand des zuvor zurückgelegten Wegs evaluierte Information über die zumindest etwa zu erwartende Lage der Erntegutkante oder des Schwads oder der Bearbeitungsgrenze zuführt. Wird somit zu Beginn der Ernte das Vorgewende eines Feldes abgeerntet und ist somit der Umriss des Feldes der Steuereinrichtung durch die Aufzeichnung der zurückgelegten Positionen bekannt, so liegt eine Information vor, welcher Anteil des Felds schon bearbeitet (abgeerntet) ist. Diese Information kann genutzt werden, wenn der Laserabtastsensor nicht in der Lage ist, die Bearbeitungsgrenze selbsttätig zu erfassen. Auch bei der Einfahrt in den Bestand kann diese Information genutzt werden, um die Lage der Bearbeitungsgrenze festzustellen und den drehbar angebrachten Sensor entsprechend auszurichten. Die Vorhersage des Fahrwegs beruht auf der Annahme, dass die Fahrwege stetig und zur Nachbarspur parallel verlaufen. Nur derartigen Fahrwegen entsprechende Kanten werden vom Laserabtastsensor als Möglichkeit für die Bestandskante verwendet. Schräg oder in unplausiblem Abstand verlaufende Kanten, die der Laserabtastsensor detektiert, können vernachlässigt werden. Zur Erkennung schräg verlaufender Kanten werden alle erfassten Kanten eine Zeit lang gespeichert, so dass deren Verlauf erkennbar wird. Wenn bei Kurvenfahrten die Bearbeitungsgrenze außerhalb des Messbereichs des Abtastsensors geraten ist, kann der Abtastwinkelbereich des Laserabtastsensors anhand der erfassten Position neu ausgerichtet werden. Das geschieht Sensor-intern durch Veränderung der Lage von Linsen, Sender und Empfänger und/oder durch Drehung der gesamten Sensoreinheit.

Mit Hilfe der beschriebenen Berechnung der zu erwartenden Lage der Bearbeitungsgrenze kann der Abtastwinkel eines Laserabtastsensors auf einen Bereich um die zu erwartende Bearbeitungsgrenze herum programmgesteuert verkleinert werden. Somit lassen sich höhere Abtastraten und besseres Regelverhalten bei höherer Vortriebsgeschwindigkeit erzielen. Bei der Einengung des Abtastwinkelbereichs muss allerdings die Qualität (Genauigkeit) der verfügbaren Positionsdaten mit in Betracht gezogen werden.

In den Zeichnungen ist ein nachfolgend näher beschriebenes Ausführungsbeispiel der Erfindung dargestellt. Es zeigt:
- Fig. 1: ein landwirtschaftliches Arbeitsfahrzeug mit einer erfindungsgemäßen Einrichtung zur selbsttätigen Lenkung,
- Fig. 2: eine Draufsicht auf das Arbeitsfahrzeug beim Abernten eines Felds, und
- Fig. 3: ein Flussdiagramm, nach dem die Steuerungseinrichtung arbeitet.

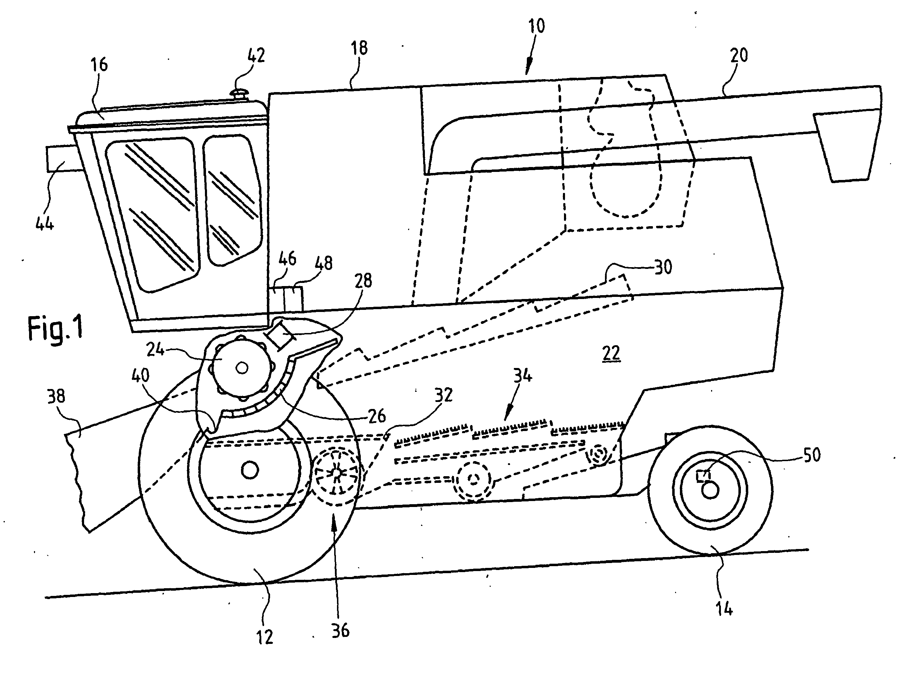

Ein in Figur 1 gezeigtes landwirtschaftliches Arbeitsfahrzeug 10 in der Form eines Mähdreschers ist auf vorderen angetriebenen und rückwärtigen lenkbaren Rädern 12 bzw. 14 getragen und weist eine Fahrerkabine 16 auf, von der aus es von einem Fahrer bedient werden kann. Anstatt eines Mähdreschers könnte ebenso ein Feldhäcksler, eine selbstfahrende Großballenpresse, ein Traktor mit einem Bodenbearbeitungsgerät oder einer Sämaschine in Frage kommen. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde 40 der Dreschtrommel 24 zugeführt, nachdem es von einer nicht gezeigten Erntegutbergungsvorrichtung vom Boden aufgenommen worden ist.

An der Oberseite der Fahrerkabine 16 ist ein erster Positionssensor 42 angeordnet, bei dem es sich um eine Antenne zum Empfang von GPS-Signalen handelt.

An der Vorderseite der Fahrerkabine 16 befindet sich ein zweiter Positionssensor 44, der einen Laserstrahl aussendet, welcher in Vorwärtsfahrtrichtung etwa 10 m vor der selbstfahrenden Arbeitsmaschine 10 den Erdboden erreicht, dort (zumindest teilweise) reflektiert wird und von einem Empfänger des Positionssensors 44 registriert wird. Anhand der Laufzeit des Laserstrahls wird die Entfernung zum Reflexionspunkt bestimmt. Der zweite Positionssensor 44 wird um eine näherungsweise vertikale Achse verschwenkt, um einen Bereich quer zur Vorwärtsbewegungsrichtung abzurastern. Das Signal des Empfängers ermöglicht, den Winkel zwischen der Vorwärtsfahrtrichtung und der Position einer Bestandsgrenze festzustellen. Derartige Positionssensoren 44 sind an sich bekannt und beispielsweise in der DE 197 43 884 A, EP 0 878 121 A und EP 0 887 660 A beschrieben, deren Offenbarung durch Verweis hierin mit aufgenommen wird. Es besteht auch die Möglichkeit, einen Laser-Entfernungssensor zu verwenden, bei dem nicht der Sender und/oder Empfänger gedreht wird, sondern ein stufenlos bzw. in Stufen rotierender Spiegel zur Abtastung des Sichtbereichs dient. Er kann einen Winkelbereich von bis zu 180° abtasten. Derartige Sensoren sind von der Fa. Sick AG, D-72796 Reute unter der Bezeichnung LMS erhältlich. Bei derartigen Sensoren ist die Wahrscheinlichkeit, mehrere mögliche Bearbeitungsgrenzen zu identifizieren, noch größer als bei den Laser-Entfernungssensoren, bei denen der Sender und/oder Empfänger gedreht wird. Daher ist die beschriebene Identifikation der Bearbeitungsgrenze durch zusätzliche Informationen bei diesen Sensoren sehr sinnvoll.

Der erste Positionssensor 42 und der zweite Positionssensor 44 sind über einen Bus mit einer Steuerungseinrichtung 46 verbunden, die auch mit einer Speichereinrichtung 48 verbunden ist. Die Steuerungseinrichtung 46 ist eingerichtet, eine Lenkeinrichtung 50 mit einem Lenksignal zu versorgen. Die Lenkeinrichtung 50 dient zur automatischen Einstellung des Lenkwinkels der rückwärtigen lenkbaren Räder 14.

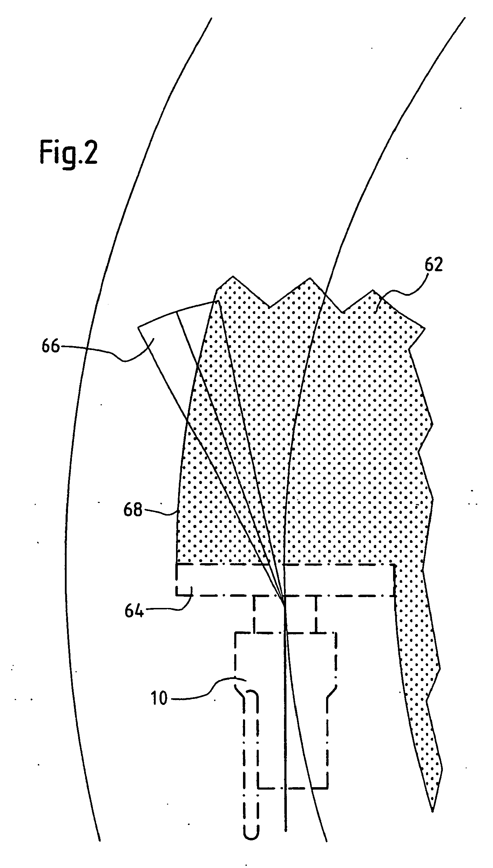

In Figur 2 ist eine Draufsicht auf das Arbeitsfahrzeug 10 beim Abernten eines Felds dargestellt. Die Erntegutbergungseinrichtung 64 ist ein Schneidwerk, das die Pflanzen (Getreide) vom Feld aberntet. Das Bezugszeichen 68 kennzeichnet die Bearbeitungsgrenze zwischen dem abgeernteten Bereich des Felds und den noch abzuerntenden Pflanzen 62. Der vom Abtastsensor 44 überstrichene Winkelbereich ist mit dem Bezugszeichen 66 versehen. Es ist erkennbar, dass der rechte Endbereich des Winkelbereichs 66 die Bearbeitungsgrenze 68 überdeckt. Außerdem ist ersichtlich, dass eine Zeitverzögerung zwischen der Messung der Position der Bearbeitungsgrenze 68 und dem Zeitpunkt, an dem das Arbeitsfahrzeug den gemessenen Punkt erreicht, vorliegt, der bei der Ansteuerung der Lenkeinrichtung 50 zu berücksichtigen ist.

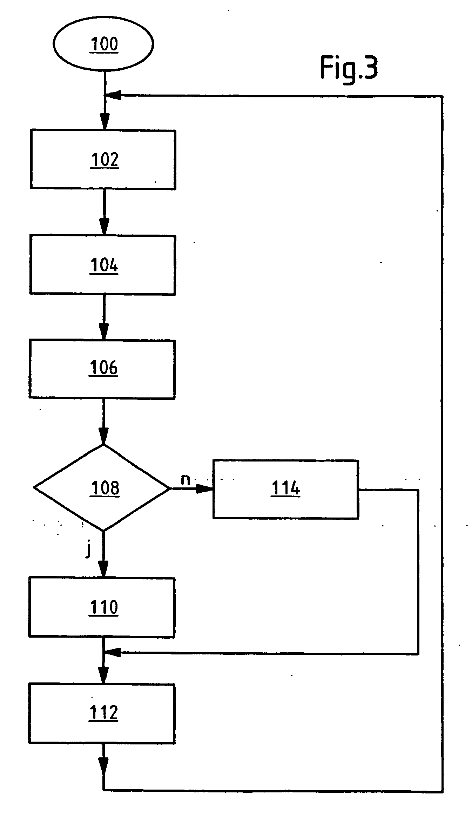

Figur 3 zeigt ein Flussdiagramm, nach dem die Steuerungseinrichtung 46 arbeitet. Nach dem Start in Schritt 100 folgt Schritt 102, in dem das (erste) Positionssignal des ersten Positionssensors 42 empfangen wird. Ein Problem besteht darin, dass die Signale eines Satellitensystems abhängig von den äußeren Bedingungen unterschiedliche Genauigkeiten aufweisen können. So kann es bei Arbeitsflächen mit begrenztem Sichtbereich zum Himmel problematisch sein, hinreichend viele GPS-Satelliten oder bei Verwendung von DGPS Korrektursignale zu empfangen. In der Nähe des Arbeitsfahrzeugs befindliche Hindernisse wie Gebäude oder Bäume erzeugen Laufzeitfehler, welche die Genauigkeit beeinträchtigen. Gemeinsam mit dem Positionssignal übersendet deshalb der erste Positionssensor eine Information über die Qualität bzw. Genauigkeit des ersten Positionssignals, die aus der Anzahl der derzeit empfangenen GPS-Satelliten und der Amplitude (Feldstärke) der vom ersten Positionssensor 42 empfangenen Signale abgeleitet wird. Die an die Steuerungseinrichtung 42 übermittelte erste Qualitätsinformation ist somit ein Maß, wie genau bzw. zuverlässig das erste Positionssignal ist.

Im folgenden Schritt 104 empfängt die Steuerungseinrichtung 46 ein zweites Positionssignal vom zweiten Positionssensor 44. Das zweite Positionssignal enthält eine Information, welchen Winkel die Längsachse des Arbeitsfahrzeugs 10 mit der Bestandskante des derzeit abgeernteten Felds einschließt. Optische Sensoren zur Schwad- oder Bestandskantenerkennung können beispielsweise bei staubigen Bedingungen, bei Nebel, bei Lagergetreide und in sehr dünnen Beständen, bei engen Kurvenfahrten, bei Einfahrt in den Bestand, wenn keine Vorabinformation über die Lage der Bestandskante vom Fahrzeug aus gesehen verfügbar ist, bei der Erkennung des Feldendes und wenn mehrere Kanten, beispielsweise Fahrspuren oder Schwade, erkannt werden, nicht zufriedenstellend arbeiten. In derartigen Fällen würde eine Berücksichtigung des Ausgangssignals der Sensoren, die zwar noch ein Signal liefern, das jedoch nicht hinreichend exakt ist, die Genauigkeit der Lenkung in nachteiliger Weise beeinflussen. Aus diesem Grunde erhält die Steuerungseinrichtung 46 eine zweite Qualitätsinformation, die aus der Größe der Änderung des vom Empfänger des zweiten Positionssensors 44 aufgenommenen Signals an der Bestandskante abgeleitet wird. Je größer die Änderung des Signals an der Bestandskante ist, umso genauer wird die Messung des Winkels sein, unter dem die Bestandskante liegt.

Im Schritt 106 wird die aktuelle Position des Arbeitsfahrzeugs 10 aus dem ersten Positionssignal und dem zweiten Positionssignal errechnet. Das zweite Positionssignal enthält eine Information über die Position des Arbeitsfahrzeugs 10 relativ zur Bestandskante, deren Genauigkeit im Zentimeterbereich liegt. Da die Arbeit auf dem Feld normalerweise in parallelen Wegen mit einem bearbeitungswerkzeugspezifischen Versatz erfolgt, kann die Lage der Bestandskante von vorherigen Überquerungen des Felds, bei denen die Position der Arbeitsmaschine 10 in der Speichereinrichtung abgespeichert wurde, vorherberechnet werden. Anhand der vorherberechneten Lage der Bestandskante und der mit dem zweiten Positionssensor gemessenen Position des Arbeitsfahrzeugs 10 relativ zu ihr kann das zweite Positionssignal zur Verbesserung der Genauigkeit des ersten Positionssignals herangezogen werden. Die Position des Arbeitsfahrzeugs 10 wird unter Berücksichtigung der Fahrtrichtung und -geschwindigkeit und der durch die Zeit, die die Arbeitsmaschine 10 benötigt, mit dem ersten Positionssensor 42 den Ort zu erreichen, den der zweite Positionssensor 44 erfasst, bedingten Verzögerung zwischen den Signalen des ersten Positionssensors 42 und zweiten Positionssensors 44 bestimmt. Dabei erfolgt eine Berücksichtigung der beiden Positionssignale in einem Maß, das von den beiden Qualitätsinformationen abhängt. Je besser die Qualität eines der Signale relativ zum anderen Signal ist, umso stärker wird es berücksichtigt.

Im folgenden Schritt 108 erfolgt eine Abfrage, ob die Genauigkeit des zweiten Positionssignals größer als ein abgespeicherter Schwellenwert ist, der einer Genauigkeit von einigen Zentimetern entspricht. Falls die Genauigkeit hinreicht, folgt Schritt 110, in dem basierend auf dem zweiten Positionssignal ein Lenksignal erzeugt und der Lenkeinrichtung 50 zugeführt wird. Das Lenksignal wird von der Steuerungseinrichtung 46 anhand des zweiten Positionssignals oder der in Schritt 106 berechneten Position derart gewählt, dass das Arbeitsfahrzeug 10 in an sich bekannter Weise entlang einer Bestandskante geführt wird. Die in der Speichereinrichtung 48 abgelegte Sollweginformation entspricht dem beabsichtigen Weg entlang der Bestandskante, wobei jedoch keine Karte, sondern nur der gewünschte Querabstand zwischen der Längsmittelachse des Arbeitsfahrzeugs 10 und der Bestandskante abgespeichert ist. Im Schritt 112 veranlasst die Steuerungseinrichtung 46, dass die in Schritt 106 berechnete Positionsinformation in der Speichereinrichtung 48 abgelegt wird. Auf Schritt 112 folgt wieder Schritt 102.

Ergibt Schritt 108, dass die Genauigkeit des zweiten Positionssignals nicht hinreicht, folgt Schritt 114, in dem aus dem Positionssignal, wie es in Schritt 106 berechnet wurde, dessen Genauigkeit bei nicht hinreichender Genauigkeit des zweiten Positionssignals oder unabhängig davon durch lokale Sensoren für die Bewegung der Arbeitsmaschine 10, die Lenkwinkel und Beschleunigung und möglicherweise den Hangwinkel erfassen, weiter verbessert werden kann, und aus dem bisher vom Arbeitsfahrzeug zurückgelegten Weg, der in der Speichereinrichtung 48 aufgezeichnet wurde, ein Lenksignal erzeugt und der Lenkeinrichtung 50 zugeführt wird. Da die Feldarbeit normalerweise in parallelen Bahnen mit einem von der Breite der Erntegutbergungsvorrichtung abhängigen Versatz erfolgt, kann der Weg des Arbeitsfahrzeugs 10 basierend auf dem (mittels der in Schritt 106 berechneten Positionen) aufgezeichneten Weg vorhergesagt werden. Die Art der Bestimmung des Sollwegs (z. B. durch eine Karte, anhand der Bearbeitungsgrenze oder anhand des bisherigen Wegs) kann - zusätzlich zur beschriebenen selbsttätigen Auswahl - auch durch den Bediener eingebbar sein.

Auf Schritt 114 folgt Schritt 112.

## Patentansprüche

1. Einrichtung zur selbsttätigen Lenkung eines landwirtschaftlichen Arbeitsfahrzeugs (10), mit einer Steuerungseinrichtung (46), die von einem ersten Positionssensor (42) mit einem ersten Positionssignal, von einem zweiten Positionssensor (44) mit einem zweiten Positionssignal und mit einer Sollweginformation beaufschlagt wird, wobei das erste Positionssignal und das zweite Positionssignal jeweils eine Information über die derzeitige Position des Arbeitsfahrzeugs (10) enthalten, die Sollweginformation eine Information über einen beabsichtigten Weg des Arbeitsfahrzeugs (10) enthält, die Steuerungseinrichtung (46) einer Lenkeinrichtung (50) des Arbeitsfahrzeugs (10) ein Lenksignal zuführt, das auf der Sollweginformation und einem Positionssignal beruht, **dadurch gekennzeichnet, dass** der Steuerungseinrichtung (46) eine Qualitätsinformation über die Genauigkeit eines der Positionssignale vorliegt, und dass die Steuerungseinrichtung (46) die Sollweginformation anhand der Qualitätsinformation unter mehreren möglichen Sollweginformationen auswählt.

2. Einrichtung nach Anspruch 1, **dadurch gekennzeichnet, dass** die Steuerungseinrichtung (46) die Sollweginformation unter einer abgespeicherten Karte und/oder der Position der Arbeitsmaschine (10) relativ zu einem ortsfesten Objekt, wie einer Bearbeitungsgrenze und/oder dem zuvor zurückgelegten Weg auswählt.

3. Einrichtung nach Anspruch 1 oder 2, **dadurch gekennzeichnet, dass** die Steuerungseinrichtung (46) beim Erzeugen des Lenksignals das erste Positionssignal und das zweite Positionssignal entsprechend der Qualitätsinformation gewichtet berücksichtigt.

4. Einrichtung nach Anspruch 3, **dadurch gekennzeichnet, dass** der Steuerungseinrichtung (46) eine Qualitätsinformation über die Qualität beider Positionssignale vorliegt, die bei der gewichteten Berücksichtigung des ersten Positionssignals und des zweiten Positionssignals berücksichtigt wird.

5. Einrichtung nach einem der Ansprüche 1 bis 4, **dadurch gekennzeichnet, dass** das erste Positionssignal durch ein Satellitensignal erzeugt wird.

6. Einrichtung nach einem der Ansprüche 1 bis 5, **dadurch gekennzeichnet, dass** das zweite Positionssignal durch einen am Arbeitsfahrzeug (10) angebrachten lokalen, zweiten Positionssensor (44) erzeugt wird, der eingerichtet ist, die Bewegung des Arbeitsfahrzeugs (10) und/oder dessen Position relativ zu einem ortsfesten Objekt zu erfassen.

7. Einrichtung nach Anspruch 6, **dadurch gekennzeichnet, dass** der lokale Sensor (44) zur Erfassung einer Erntegutkante oder eines Schwads oder einer Bearbeitungsgrenze eingerichtet ist.

8. Einrichtung nach Anspruch 7, **dadurch gekennzeichnet, dass** die Steuerungseinrichtung (46) dem zweiten Positionssensor (44) eine anhand des zuvor zurückgelegten Wegs evaluierte Information über die zumindest etwa zu erwartende Lage der Erntegutkante oder des Schwads oder der Bearbeitungsgrenze zuführt.

9. Einrichtung nach Anspruch 8, **dadurch gekennzeichnet, dass** der zweite Positionssensor (44) ein Laserabtastsensor ist, dessen Abtastwinkel auf einen Bereich um die zu erwartende Lage der Erntegutkante oder des Schwads oder der Bearbeitungsgrenze einschränkbar ist.

10. Landwirtschaftliches Arbeitsfahrzeug (10), insbesondere Erntemaschine, nach einem der vorhergehenden Ansprüchen.

## Claims

1. Automatic steering system for an agricultural work vehicle (10), with a control system (46), which is supplied with a first position signal from a first position sensor (42), a second position signal from a second position sensor (44) and with set route information, wherein the first position signal and the second position signal each include information concerning the current position of the work vehicle (10), the set route information includes information concerning an intended route of the work vehicle (10), the control system (46) of a steering system (50) of the work vehicle (10) delivers a steering signal, which is based on the set route information and a position signal, **characterised in that** quality information concerning the accuracy of one of the position signals is present in the control system (46), and that the control system (46) selects the set route information on the basis of the quality information from several possible set route data.

2. System according to Claim 1, **characterised in that** the control system (46) selects the set route information from a stored map and/or the position of the work machine (10) in relation to a fixed object such as a processing boundary and/or the previously covered path.

3. System according to Claim 1 or 2, **characterised in that** when generating the steering signal the control system (46) takes into consideration the first position signal and the second position signal weighted in accordance with the quality information.

4. System according to Claim 3, **characterised in that** quality information concerning the quality of both position signals is present in the control system (46) and is taken into consideration during the weighted consideration of the first position signal and the second position signal.

5. System according to one of Claims 1 to 4, **characterised in that** the first position signal is generated by a satellite signal.

6. System according to one of Claims 1 to 5, **characterised in that** the second position signal is generated through a local second position sensor (44), which is attached to the work vehicle (10) and is arranged to detect the movement of the work vehicle (10) and/or its position relative to a fixed object.

7. System according to Claim 6, **characterised in that** the local sensor (44) is arranged for detection of a crop material boundary or a swath or a processing boundary.

8. System according to Claim 7, **characterised in that** the control system (46) delivers information, which is evaluated on the basis of the previously covered path and concerns the at least expected position of the crop material boundary or the swath or the processing boundary, to the second position sensor (44).

9. System according to Claim 8, **characterised in that** the second position sensor (44) is a laser scanning sensor, the scanning angle of which can be restricted to a region around the expected position of the crop material boundary or the swath or the processing boundary.

10. Agricultural work vehicle (10), in particular harvesting machine, according to one of the preceding claims.

## Revendications

1. Dispositif de direction automatique d'un véhicule de travail (10) agricole, comportant un dispositif de commande (46) qui reçoit un premier signal de position, délivré par un premier capteur de position (42), un deuxième signal de position, délivré par un deuxième capteur de position (44), et une information de trajet de consigne, le premier signal de position et le deuxième signal de position contenant chacun une information sur la position actuelle du véhicule de travail (10), l'information de trajet de consigne contenant une information sur un trajet envisagé du véhicule de travail (10), le dispositif de commande (46) acheminant vers un dispositif de direction (50) du véhicule de travail (10) un signal de direction qui est basé sur l'information de trajet de consigne et un signal de position, **caractérisé en ce que** le dispositif de commande (46) dispose d'une information de qualité sur la précision de l'un des signaux de position et **en ce que** le dispositif de commande (46), à l'appui de l'information de qualité, sélectionne l'information de trajet de consigne parmi plusieurs informations de trajet de consigne possibles.

2. Dispositif selon la revendication 1, **caractérisé en ce que** le dispositif de commande (46) sélectionne l'information de trajet de consigne moyennant une carte mémorisée et/ou la position du véhicule de travail (10) par rapport à un objet fixe, tel qu'une limite de travail, et/ou par rapport au trajet parcouru précédemment.

3. Dispositif selon la revendication 1 ou 2, **caractérisé en ce que** le dispositif de commande (46), lorsqu'il génère le signal de direction, tient compte du premier signal de position et du deuxième signal de position, pondérés en fonction de l'information de qualité.

4. Dispositif selon la revendication 3, **caractérisé en ce que** le dispositif de commande (46) dispose d'une information de qualité sur la qualité des deux signaux de position, laquelle est prise en compte lors de la prise en compte pondérée du premier signal de position et du deuxième signal de position.

5. Dispositif selon l'une quelconque des revendications 1 à 4, **caractérisé en ce que** le premier signal de position est généré par un signal satellite.

6. Dispositif selon l'une quelconque des revendications 1 à 5, **caractérisé en ce que** le deuxième signal de position est généré par un deuxième capteur de position (44) local, qui est agencé sur le véhicule de travail (10) et qui est conçu pour détecter le mouvement du véhicule de travail (10) et/ou la position de celui-ci par rapport à un objet fixe.

7. Dispositif selon la revendication 6, **caractérisé en ce que** le capteur (44) local est conçu pour détecter un bord des végétaux à récolter ou un andain ou une limite de travail.

8. Dispositif selon la revendication 7, **caractérisé en ce que** le dispositif de commande (46) achemine vers le deuxième capteur de position (44) une information, évaluée à l'appui du trajet parcouru précédemment et concernant la position au moins à escompter du bord des végétaux à récolter ou de l'andain ou de la limite de travail.

9. Dispositif selon la revendication 8, **caractérisé en ce que** le deuxième capteur de position (44) est un capteur à balayage laser, dont l'angle de balayage peut être limité à une zone autour de la position à escompter du bord des végétaux à récolter ou de l'andain ou de la limite de travail.

10. Véhicule de travail (10) agricole, en particulier machine de récolte, selon l'une quelconque des revendications précédentes.
